# EUROPEAN PATENT SPECIFICATION

(11) **EP 3 087 235 B1**
(45) Date of publication and mention of the grant of the patent: **02.12.2020**
(21) Application number: 13900295.0
(22) Date of filing: 23.12.2013
(51) Int. Cl.: E05B 65/52, B60R 7/06, E05C 19/06, E05B 83/30

(54) **LOCKING DEVICE COMPRISING A LOCKING ELEMENT MOVABLE IN A FIRST DIRECTION AND IN A SECOND DIRECTION**
VERRIEGELUNGSVORRICHTUNG MIT IN EINE ERSTE UND IN EINE ZWEITE RICHTUNG BEWEGLICHEM VERRIEGELUNGSELEMENT
DISPOSITIF DE VERROUILLAGE COMPRENANT UN ÉLÉMENT DE VERROUILLAGE MOBILE DANS UNE PREMIÈRE DIRECTION ET DANS UNE SECONDE DIRECTION

(43) Date of publication of application: 02.11.2016
(73) Proprietor: Faurecia Interior Systems India Pvt. Ltd., Pune, Maharashtra 411026 (IN)
(72) Inventor: SIDDIQUI, Firoz, Pune 411018 (IN); BHATTAD, Jaykumar, Pune 411015 (IN); PATIL, Manish, Pune 411021 (IN)
(74) Representative: Lavoix
(86) International application number: PCT/IN2013/000795
(87) International publication number: WO 2015/097707

(56) References cited:
- CN-A- 102 216 548
- CN-U- 202 706 711
- CN-Y- 201 170 002
- GB-A- 2 468 746
- JP-A- 2003 184 401
- US-A- 968 936
- US-A- 1 147 530
- US-A- 4 564 219
- US-B1- 8 601 903

## Description

The present invention relates to a locking device for locking a first element relative to a second element, the first element and the second element being movable relative to each other between a locked position of the locking device and an unlocked position of the locking device, said locking device comprising :
- at least one locking element provided on the first element, said locking element being movable in a first direction between an inactive position and an active position;
- at least a biasing element for urging the locking element towards its inactive position,
- at least one complementary locking element provided on the second element, said complementary locking element being arranged to move the locking element from its active position to its inactive position, when the locking device is moved from the unlocked position to the locked position, and retaining the locking element in its inactive position when the locking device is in its locked position. Document JP 2003 184401 A discloses such a locking device.

The present invention also relates to a storage device comprising such a locking device.

The invention is for example adapted to be used for locking and unlocking the door of a glove box of an automotive vehicle.

In such a glove box, it is important that the door is firmly maintained in the closed position for preventing any unwanted opening of the glove box, for example in case of a shock against the vehicle, and for preventing the objects contained in the glove box from coming out of the storage space. Consequently, the locking of the door has to be robust, which involves using locking means having a high "locking strength" preventing the locking means from being unlocked inadvertently. For example, if clamping elements are used as locking means, the clamping force of these elements has to be important for preventing the clamping elements from being unclamped from the main body of the glove box, for example in case of a shock against the glove box.

However, with such robust locking means, the user can have difficulties in opening the glove box since the force needed to unlock the locking means is important and requires an important effort from the user. For example, the user may be required to press a button to unlock the door of the glove box. If the pressing force required is to important to actuate the button, the perceived quality for the user is reduced since the user may think that there is a mechanical default in the glove box.

In order to solve this problem, it has been proposed to unlock the locking means via an electronic control, the unlocking being performed by an electromechanical actuator for example. However, such solutions are expensive and hard to install in the vehicle. Furthermore, such solutions add weight to the glove box, which is not satisfactory in an automotive vehicle.

One of the aims of the invention is to overcome the above mentioned drawbacks by proposing a mechanical locking device which offers a robust locking, while being easy to unlock.

To this end, the invention relates to a locking device of the afore-mentioned type, wherein the locking element is further movable in a second direction, different from the first direction, between a locking position, wherein the locking element is in its inactive position and is retained by the complementary locking element, and an unlocking position, wherein the locking element is moved away from the complementary locking element, the locking element remaining in its inactive position during its movement between the locked position and the unlocked position.

Since the locking device can be moved in an unlocking position, without having to move the locking element in its active position, there is no need to overcome the biasing force of the biasing element biasing the locking element towards the inactive position to unlock the locking element. Consequently, the locking force can be made very important without requiring an important effort from the user to unlock the locking device. The perceived quality of the elements locked together by the locking device is therefore improved, without requiring any electronic control.

According to other features of the locking device:
- the complementary locking element is formed by at least one housing provided on the second element, said housing comprising a notch through which the locking element is able to engage when the locking element is in its active position, when the locking device is moved from the unlocked position to the locked position, and being unable to move through the notch when the locking element is in its inactive position, such that the locking device is maintained in its locked position when the locking element is in the housing in its inactive position, the locking element being further movable in the second direction between the locking position, wherein the locking element is retained in the housing in its inactive position, and an unlocking position, wherein the locking element is moved outside the housing ;
- the housing comprises an upper opening extending in a plane different from the plane in which the notch extends such that the locking element can be moved out of the housing while being in the inactive position through the upper opening of the housing ;
- the locking element comprises two locking parts movable relative to each other, between the active position, wherein the two locking parts form together a locking element having a width equal or less than the width of the notch of the housing, and the inactive position, wherein the two locking parts form together a locking element having a width greater than the width of the notch ;
- the movement of the locking element between the inactive position and the active position is triggered by the edges of the notch, each locking part coming into contact with one of said edges when the locking device is moved from its unlocked position to its locked position such that said edges move the locking parts towards the active position while the locking element is engaged in the notch ;
- the locking element is formed by a deformable housing defining a notch, said notch having a first width in the inactive position and a second width in the active position, the complementary locking element being formed by a tab having a width superior to the first width and inferior or equal to the second with ;
- the locking element comprises two locking parts movable relative to each other, said parts being close from each other in the inactive position and being spaced from each other in the active position, the locking device comprising two biasing elements each arranged to urge one of the locking part towards the other locking part;
- the locking element is movable in rotation around a first axis between its inactive position and its active position and is further movable in rotation around a second axis between its locking position and its unlocking position, the second axis being different from the first axis;
- the locking element is provided on an actuation rod attached to the first element and movable in rotation relative to said first element around the second axis such that the actuation of the actuation rod in rotation moves the locking element between the locking position and the unlocking position;
- the locking element is mounted in rotation around the first axis on at least one pin extending from the actuation rod along the first axis ; and
- two separate locking elements are provided on the actuation rod, said locking elements being spaced from each other along the second axis, the second element having two corresponding complementary locking elements for receiving said locking elements in the locked position of the locking device.

The invention also relates to a storage device of the type comprising a main body forming a storage compartment and a door for closing said storage compartment, said door being movable relative to the main body between a locked position and an unlocked position, comprising a locking device as described above, wherein the storage device comprises a locking device as defined above, wherein the first element is formed by the door and the second element is formed by the main body.

According to another feature of the storage device according to the invention, the locking element is provided on the inner face of the door, said inner face facing the storage compartment in the locked position of the door, the locking device comprising an actuator for moving the locking element in the second direction, said actuator extending through the door from the inner face to the outer face of said door such that the locking element can be actuated from its locking position to its unlocking position from the outer face of the door when the door is in its locked position.

Other aspects and advantages of the invention will appear upon reading the following description, given by way of example and made in reference to the appended drawings, wherein:
- Fig. 1 is a diagrammatical perspective view of an actuation rod carrying two locking elements of a locking device according to a first embodiment of the invention,
- Fig. 2 is a diagrammatical view from above of the locking element and of the complementary locking element forming the locking device according to the first embodiment of the invention, the locking device being in an unlocked position,
- Fig. 3 is a diagrammatical view of the locking device of Fig. 2 during the movement of the locking device between its locked and unlocked position, the locking element being in its active position,
- Fig. 4 is a diagrammatical view of the locking device of Fig. 2 in the locked position, the locking element being in its inactive position,
- Fig. 5 is diagrammatical section view according to axis V-V of Fig. 4, the locking element being in its locking position,
- Fig. 6 is a diagrammatical section view of the locking device of Fig. 5, the locking element being in its unlocking position,
- Fig. 7 is a storage device comprising a locking device according to a second embodiment of the invention,
- Figs. 8 to 10 are diagrammatical views from above of the locking device according to the second embodiment of the invention during the movement of the locking device between its locked and unlocked position, the locking element moving between its inactive and active positions, and
- Fig. 11 is a diagrammatical section view according to axis XI-XI of Fig. 10, the locking element being in its unlocking position.

The locking device 1 of the invention will now be described in reference to a storage device 2, comprising a door 4 and a main body 6. However, it is to be understood that the invention could be applied to any locking device for locking a first element, here formed by the door 4, to a second element, here formed by the main body 6. The storage device 2 described herein is a glove box. However, it should be understood that the storage device could of another kind, such as a central console, or a storage device formed in the door or in the rear of a seat of an automotive vehicle.

As known per se, the main body 6 defines a storage compartment for example formed by an inner volume delimited by a wall or walls of the main body 6. Also as known, the door 4 is movable relative to the main body 6 between an opened position, wherein the storage compartment is accessible for the user in the vehicle compartment, and a closed position, wherein the door 4 closes the inner volume of the main body 6 to make the storage compartment inaccessible from outside the storage device 2. The door 4 is for example hinged to the main body 6 and moves in rotation between the opened and closed positions. Alternatively, the door 4 can be movable in translation relative to the main body 6 between the opened and closed position, to function as a drawer. Alternatively, the door 4 can be movable both in rotation and in translation relative to the main body 6 depending on the structure of the storage device 2.

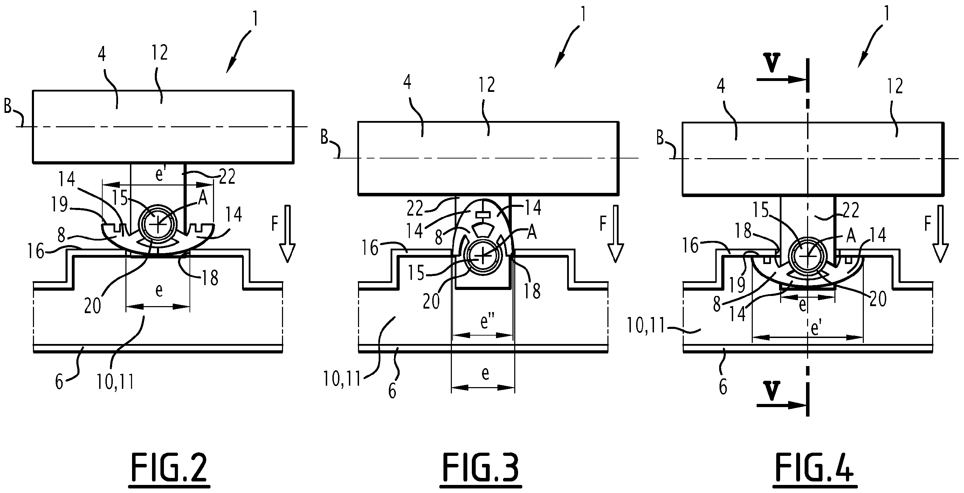

When the door 4 is in the closed position, the locking device 1 is placed in a locked position (Figs. 4, 5 and 10), wherein the door 4 is retained in its closed position and is unable to move relative to the main body 6, to prevent the door 4 from moving to its opened position in an unwanted manner. To allow the door 4 to move to its opened position, the locking device 1 has to be placed in an unlocked position (Figs. 2, 6 and 11) by a particular action of the user, as will be described subsequently.

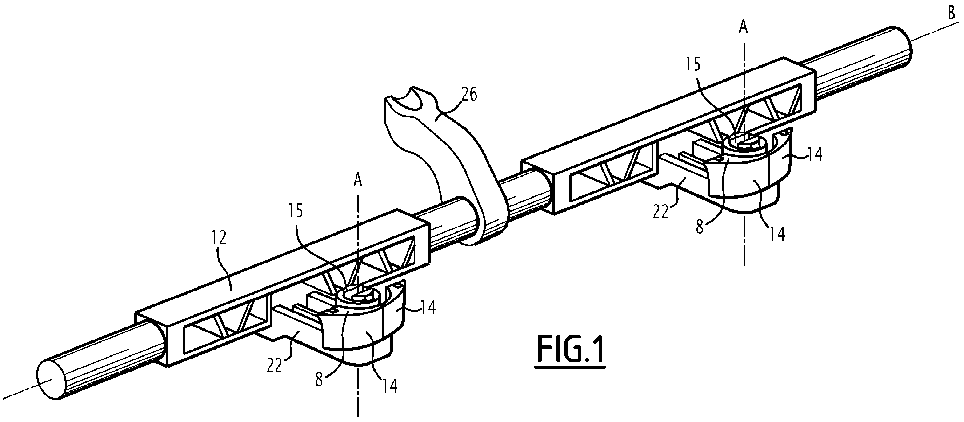

A first embodiment of the locking device 1 will now be described in reference to Figs 1 to 6.

The locking device 1 comprises at least one locking element 8 and at least one corresponding complementary locking element 10 for receiving the locking element 8 in the locked position of the locking device 1. In the embodiment shown in the figures, the locking element 8 is provided on the door 4, or first element, and the complementary locking element 10 is provided on the main body 6, or second element. More particularly, the locking element 8 is provided on an inner face 13 of the door 4, i.e. on the face of the door 4 that faces the storage compartment of the main body 6. Alternatively, the first element could be formed by the main body 6, meaning that the locking element 8 could be provided on the main body 6, and the second element could be formed by the door 4, meaning that the housing 11 could be provided on the door 4.

According to the first embodiment, the complementary locking element 10 is formed by a housing 11.

According to the variant shown in the figures, and more particularly in Fig. 1, the locking device comprises two locking elements 8 arranged on an actuation rod 12. Consequently the locking device 1 comprises two corresponding housings 11, each arranged to receive one of the locking element 8 in the locked position. It is to be understood that the locking device 1 can comprise more than two locking elements 8 and corresponding housings 11.

According to the first embodiment shown in Figs 1 to 6, the locking element 8 comprises two locking parts 14 movable relative to each other in a first direction, represented by arrows F in the figures and which corresponds to the direction in which the door 4 moves when it reaches its closed position, between an inactive position or rest position (Figs. 1, 2 and 4) and an active position (Fig. 3). The first direction F is for example substantially perpendicular to the plane in which the inner face 13 of the door 4 extends. Each locking part 14 is formed of an elongated body.

According to the first embodiment shown in Figs 1 to 6, in order to be able to move between the first shape and the second shape in the first direction, the two locking parts 14 are mounted in rotation on a pin 15 extending according to a first axis A, such that the two locking parts 14 are movable in rotation around the same first axis A between the inactive position and the active position. The first axis A is substantially perpendicular to the first direction F.

In the inactive position, the two locking parts 14 define together a first shape of the locking element 8, which first shape is arranged such that the locking elements cooperates with the housing 11 in order to maintain the locking device 1 in its locked position, whereas, in the active position, the two locking parts 14 define together a second shape of the locking element 8, which second shape is arranged such that the locking element 8 can move relative to the housing 11 in the first direction F to allow the locking device 1 to move from its unlocked position to its locked position.

The housing 11 comprises a front wall 16 extending in a plane substantially perpendicular to the first direction F, i.e. facing the inner face 13 of the door 4, meaning that when the door 4 is moved towards its closed position, the locking element 8 provided on the inner face 13 of the door 4 is moved in the first direction F towards the front wall 16 of the housing 11 and comes in contact with said wall, as shown in Fig. 2. The front wall 16 comprises a notch 18 extending through the front wall 16 according to an axis which is substantially perpendicular to the first direction F, i.e. according the height of the front wall 16. The notch 18 has a width e according to a direction, substantially perpendicular to the first direction F, contained in the plane of the front wall 16 and perpendicular to the height of the front wall 16, i.e. according to the width of the front wall 16.

In the inactive position, the first shape of the locking element 8 is arranged such that the width e' of the locking element 8 is greater than the width e of the notch 18 of the housing 11, such that the locking element 8 can not move through the notch 18 according to the first direction F. In the active position, the second shape of the locking element 8 is arranged such that the width e" of the locking element 8 is substantially equal or less than the width e of the notch 18, such that the locking element 8 can move through the notch 18 according to the first direction F, as shown in Fig. 3. To this end, in the inactive position, the elongated bodies of the two locking parts 14 are placed in the continuity of each other in the direction of the width of the notch 18, as shown in Figs 2 and 4, whereas in the active position, the two locking parts 14 are folded on each other, such that the elongated bodies extend in the first direction parallel to each other and such that the width of the locking element 8 in the direction of the width of the notch 18 is reduced, as shown in Fig. 3.

The face of each locking part 14 facing the front wall 16 of the housing is curved such that the locking element 8 in the inactive position forms a cavity turned toward the inner wall 13 of the door, as shown in Fig. 1, 2 and 4. The curved face of the locking part 14 forms a cam surface guiding the movement of the locking element 8 between the inactive position and the active position, as will be described subsequently. At the end of the curved cam surface, each locking part 14 comprises an abutment surface 19 substantially parallel to the front wall 16 of the housing 10 and facing the inner face 13 of the door 4.

The locking device 1 further comprises a biasing element 20, arranged on the pin 15 between the two locking parts 14 and arranged to bias, or urge, the two locking parts towards the inactive position of the locking element 8. This means, that, when no force is applied against the locking element 8, the locking element 8 is maintained in its inactive position by the biasing element 20. The biasing element 20 is for example a torsion spring applying a constraint on the two locking parts 14 to urge them towards the inactive position.

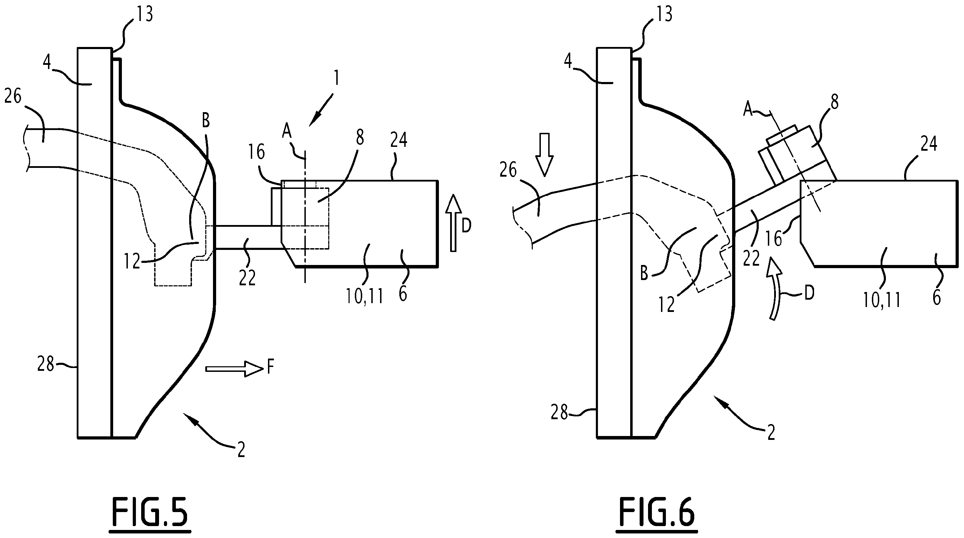

As described previously, the locking element 8 is mounted on an actuation rod 12. More particularly, the pin 15 extends according to the first axis A from a tab 22 extending from the actuation rod 12 along the first direction F, as shown in Figs 2 to 6. The actuation rod 12 is itself mounted in rotation on the inner face 13 of the door 4 around a second axis B, different from the first axis A, and arranged such that the locking element 8 is movable in a second direction, different from the first direction F and represented by arrows D in Figs 5 and 6, when the actuation rod 12 is moved in rotation around the second axis B. According to the embodiment shown in the figures, the second axis B is substantially perpendicular to the first direction F and to the first axis A such that the second axis B is substantially parallel to the plane in which the inner face 13 of the door 4 extends. Consequently, the second direction is substantially parallel to the first axis A as can be seen in Figs 5 and 6.

The housing 11 comprises an upper opening 24 arranged to allow the locking element 8 to come out of the housing 11 when the locking element 8 is moved in the second direction. To this end, the upper opening 24 extends for example in a plane substantially perpendicular to the second direction D and is substantially perpendicular to the front wall 16 of the housing 11. The notch 18 of the front wall 16 opens in the upper opening 24, such that when the tab 22 extends in the notch 18, the tab 22 can come out of the housing 11 with the locking element 8 when the locking element 8 is moved in the second direction.

The actuation rod 12 further comprises an actuator 26 allowing a user to move the actuation rod 12 in rotation around the second axis B. The actuator 26 is for example formed of a lever extending from the actuation rod 12 inside an opening formed in the door 4, such that the lever extends on the outer face 28 of the door 4, as shown in Figs 5 and 6. The outer face 28 extends in the vehicle compartment, such that the lever is accessible for the user when the door 4 is in its closed position.

As mentioned previously, in the embodiment shown in Fig. 1, two locking elements 8 are provided on the actuation rod 12. The two locking elements are spaced from each other along the second axis B to distribute the locking elements over the whole width of the door 4 and ensure an improved locking of the door 4.

The functioning of the locking device 1 and of the storage device 2 according to the first embodiment of the invention will now be explained.

First, the functioning of the locking device 1 during the closing and locking of the door 4 will be described. The description will be made with reference to a single locking element 8, the functioning of the other locking element(s) being the same.

When the door 4 is in its opened position, the user pushes on the outer face 28 of the door 4 to move it towards its closed position. This movement causes the locking element 8 to move according to the first direction toward the corresponding locking element 10. The locking element 8 is in its inactive position as shown in Fig. 1.

When the door 4 approaches its closed position, the locking element 8 comes into contact with the front wall 16 of the housing 11 as shown in Fig. 2. By further pushing the door 4 towards its closed position, each edge of the notch 18 exert a pressure on the cam surface formed by the face of each locking part 14, thereby triggering the movement of the locking element 8 from its inactive position to its active position against the biasing force of the biasing element 20. Consequently, the locking element 8, as it moves towards its active position is able to engage in the notch 18 when moving in the first direction, as shown in Fig. 3.

Finally, once the locking element 8 has been fully engaged in the housing 11, the edges of the notch 18 no longer apply a pressure on the two locking parts 14. The locking element 8 therefore moves back to its inactive position due to the biasing element 20, while the locking element 8 extends inside the housing 11, as shown in Fig. 4. The door 4 is then in its closed position. When the locking element 8 is in its inactive position inside the housing 10, the locking device is locked since the locking element 8 can not pass through the notch 18 in the direction opposite the first direction. If a pulling force is applied on the locking element 8 to move it in the direction opposite the first direction, for example in case of a shock on the automotive vehicle, the abutment surfaces 19 of the locking parts 4 come into contact with the front wall 16 and prevent the locking element 8 from coming out of the housing 10.

Consequently, the door 4 is locked in a robust manner and it is prevented from opening in an unwanted manner when the locking device 1 is in its locked position.

It should be noted that the force required to move the door 4 to its closed position and to move the locking device 1 to its locked position is not too important for a user since the cam surfaces of the locking parts 14 assist the movement of the locking element 8 towards its active position against the force of the biasing element 20. Furthermore, since the movement to close the door 4 is a pushing movement, this effort is not considered as bothersome for a user, unlike a pulling movement requiring an important effort.

The functioning of the locking device 1 during the unlocking and opening of the door 4 will now be described.

To unlock the locking device, the user simply actuates the actuator 26 on the outer face 28 of the door 4 to make the locking element 8 come out of the housing 11. In the first embodiment shown in Figs 1 to 6, the user pushes on the lever according to a direction opposite to the second direction D, which causes the actuation rod 12 to rotate around the second axis and the locking element 8 to move from its locking position, wherein the locking element 8 is inside the housing, as shown in Fig. 4 and 5, to its unlocking position, wherein the locking element 8 has moved out of the housing 11 through the upper opening 24, as shown in Fig. 6. When the locking element is out of the housing 11, the door 4 is free to move to its opened position.

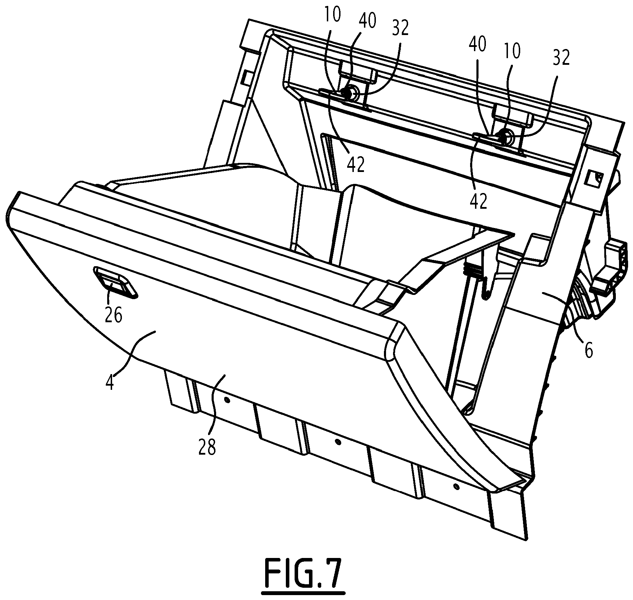

According to a second embodiment of the invention, shown in Figs 7 to 11, the locking element 8 is formed by a deformable housing 30, while the complementary locking element 10 is formed by a rigid tab 32. In the second embodiment, the same references are applied to the parts in common with the first embodiment. In particular, the directions are the same as the ones defined in the first embodiment.

More particularly, the locking element 8 comprises two locking parts 34 movable relative to each other in the first direction and defining together a notch 36 facing the rigid tab 32 and having a variable width, in a plane substantially perpendicular to the first direction, depending on the positions of the locking parts 34.

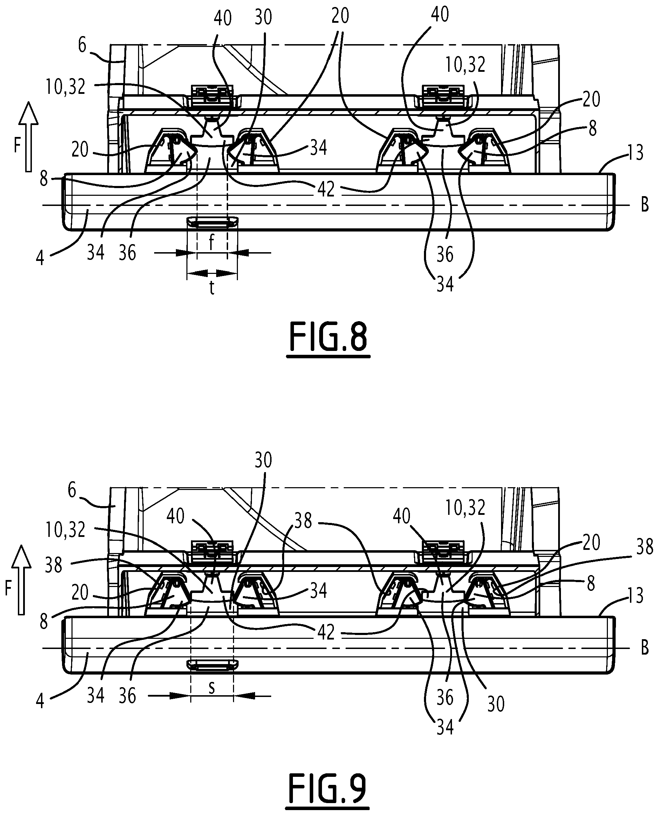

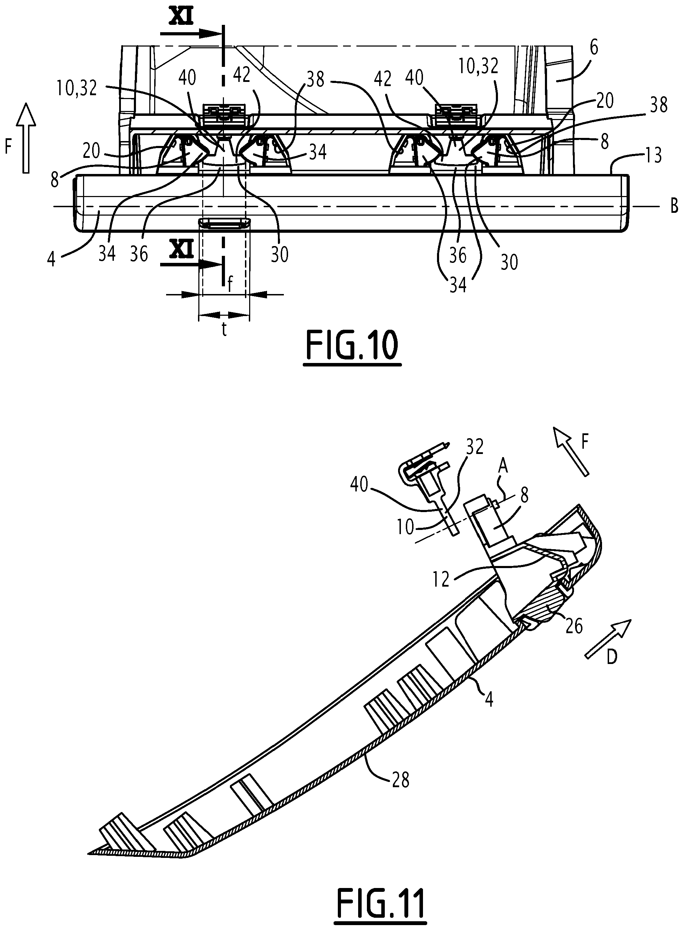

The locking element 8 for example comprises two pins spaced from each other and each extending along axis A and attached to the rod 12. Each locking part 34 is mounted in rotation around one of said pins, such that they can move relative to each other between an inactive position, wherein the locking parts 34 are close to each other, as shown in Fig. 8 and 10, and an active position, wherein the locking parts 34 are spaced from each other, as shown in Fig. 9. Consequently, in the inactive position, the locking parts 34 define together a notch 36 having a reduced first width f and, in the active position, the locking parts 34 define together a notch 36 having a greater second width s.

Each locking part 34 is urged toward the inactive position, i.e. towards the other locking part 34, by a biasing element 20. Each biasing element 20 is for example formed by a spring blade having one arm applied against one locking part 34 and another arm applied against a wall 38 extending opposite the locking part 34, on the side of the locking part 34 not facing the other locking part 34.

The rigid tab 32 forming the complementary locking element 10 comprises a shaft portion 40 attached to the main body 6 and an elongate portion 42 extending according to the width of the notch 36 at the end of the shaft portion 40. The elongate portion 42 has a third width t, which is greater than the first with f and inferior or equal to the second width s.

The first, second and third widths are measured in a direction substantially perpendicular to the first direction F. In the embodiment shown in the figures, this direction is substantially parallel to axis B, along which the rod 12 extends.

As in the first embodiment, the deformation of the locking element 8 between the inactive and the active positions is triggered by the complementary locking element 10. To this end, each locking part 34 of the locking element 8 comprises a wall forming a cam surface against which the elongate portion 42 of the fixed tab 32 applies when the door 4 is moved in the first direction F to move the locking parts 34 away from each other. The cam surfaces of the locking parts 34 diverge from each other from the notch 36 in the first direction in the inactive position, as shown in Figs. 8 and 10, and are moved to be almost parallel to each other and to the first direction in the active position, as shown in Fig. 9.

As in the first embodiment, the rod 12 is movable in rotation around axis B such that the locking element 8 can be moved in the second direction D.

The actuator 26 allowing a user to move the actuation rod 12 in rotation around the second axis B is for example formed of a push button extending in an opening formed in the door 4, such that the button extends on the outer face 28 of the door 4, as shown in Figs 7 and 11.

As in the first embodiment, two locking elements 8 are provided on the actuation rod 12. The two locking elements are spaced from each other along the second axis B to distribute the locking elements over the whole width of the door 4 and ensure an improved locking of the door 4.

The functioning of the locking device 1 and of the storage device 2 according to the second embodiment will now be explained.

First, the functioning of the locking device 1 during the closing and locking of the door 4 will be described. The description will be made with reference to a single locking element 8, the functioning of the other locking element(s) being the same.

When the door 4 is in its opened position, the user pushes on the outer face 28 of the door 4 to move it towards its closed position. This movement causes the locking element 8 to move according to the first direction toward the corresponding complementary locking element 10. The locking element 8 is in its inactive position.

When the door 4 approaches its closed position, the elongate portion 42 of the fixed tab 32 comes into contact with the cam surfaces of the two locking parts 34 of the locking element 8, as shown in Fig. 8. By further pushing the door 4 towards its closed position, the elongate portion 42 exerts a pressure on each cam surface, thereby triggering the movement of the locking parts 34 of the locking element 8 from its inactive position to its active position against the biasing force of the biasing element 20. Consequently, the fixed tab 32 is able to engage in the notch 36 of the locking element 8, as it moves towards its active position when moving in the first direction, as shown in Fig. 9. Indeed, the movement of the locking element 8 towards its active position causes the width of the notch 36 to increase from its first width to its second width, the elongate portion 42 of the tab 32 being able to move trough the notch 36 having the second width.

Finally, once the tab 32 has been fully engaged in the housing 30 the elongate portion 42 no longer applies a pressure on the two locking parts 34. The locking element 8 therefore moves back to its inactive position due to the biasing element 20, while the tab 32 extends inside the housing 30, i.e. past the notch 36, as shown in Fig. 10. The door 4 is then in its closed position. When the tab 32 is inside the housing 30 in its inactive position, the locking device is locked since the tab 32 can not pass through the notch 36 in the direction opposite the first direction. If a pulling force is applied on the locking element 8 to move it in the direction opposite the first direction, for example in case of a shock on the automotive vehicle, the elongate portion 42 of the tab 32 comes into contact with the locking parts 34 and the locking element 8 is not deformed to its active position.

Consequently, the door 4 is locked in a robust manner and it is prevented from opening in an unwanted manner when the locking device 1 is in its locked position.

It should be noted that the force required to move the door 4 to its closed position and to move the locking device 1 to its locked position is not too important for a user since the cam surfaces of the locking parts 34 assist the movement of the locking element 8 towards its active position against the force of the biasing element 20. Furthermore, since the movement to close the door 4 is a pushing movement, this effort is not considered as bothersome for a user, unlike a pulling movement requiring an important effort.

The functioning of the locking device 1 during the unlocking and opening of the door 4 will now be described.

To unlock the locking device, the user simply actuates the actuator 26 on the outer face 28 of the door 4 to make the locking element 8 disengage from the tab 32. In the second embodiment shown in Figs 7 to 11, the user pushes on push button, which causes the actuation rod 12 to rotate around the second axis and the locking element 8 to move from its locking position, wherein the tab 32 is inside the housing 30, as shown in Fig. 10, to its unlocking position, wherein the locking element 8 has moved away from the tab 32, as shown in Fig. 11. When the locking element 8 is away from the tab 32, the door 4 is free to move to its opened position.

Both in the first and in the second embodiments, the movement of the locking element 8 from its locking position to its unlocking position is performed while the locking element 8 remains in its inactive position, meaning that the user does not have to overcome the biasing force of the biasing element 20 to open the door 4. Consequently, the unlocking and opening of the door require very little effort from the user. When the locking device 1 comprises several locking elements 8, a single actuation of the actuator 26 is sufficient to move all the locking elements 8 to their unlocking position at the same time, which makes the unlocking of the door 4 very simple. The storage device 2 described above therefore offers a high perceived quality.

When the storage device 2 is a glove box, the first direction is typically the rear-front direction of the automotive vehicle and the second direction is a vertical direction. However, it should be understood that the first and second directions can be other directions depending on the storage device 2 using the locking device according to the invention.

The locking element 8 has been described as comprising two locking parts 14 or 34. However, it should be understood that the locking element 8 could be made of a single part having a shape adapted to pass through the notch 18 in the active position and unable to pass through the notch 18 in the inactive position in the first embodiment or having a deformable notch in the second embodiment.

## Claims

1. Locking device (1) for locking a first element relative to a second element, the first element and the second element being movable relative to each other between a locked position of the locking device (1) and an unlocked position of the locking device (1), said locking device (1) comprising :
- at least' one locking element (8) provided on the first element, said locking element (8) being movable in a first direction (F) between an inactive position and an active position;
- at least a biasing element (20) for urging the locking element (8) towards its inactive position,
- at least one complementary locking element (10) provided on the second element, said complementary locking element (10) being arranged to move the locking element (8) from its active position to its inactive position, when the locking device is moved from the unlocked position to the locked position, and retaining the locking element (8) in its inactive position when the locking device (1) is in its locked position,
**characterized in that** the locking element (8) is further movable in a second direction (D), different from the first direction, between a locking position, wherein the locking element (8) is in its inactive position and is retained by the complementary locking element (10), and an unlocking position, wherein the locking element (8) is moved away from the complementary locking element (10), the locking element (8) remaining in its inactive position during its movement between the locked position and the unlocked position.

2. Locking device (1) according to claim 1, wherein the complementary locking element (10) is formed by at least one housing (11) provided on the second element, said housing (11) comprising a notch (18) through which the locking element (8) is able to engage when the locking element (8) is in its active position, when the locking device is moved from the unlocked position to the locked position, and being unable to move through the notch (18) when the locking element (8) is in its inactive position, such that the locking device (1) is maintained in its locked position when the locking element (8) is in the housing (11) in its inactive position, the locking element (8) being further movable in the second direction (D) between the locking position, wherein the locking element (8) is retained in the housing (11) in its inactive position, and an unlocking position, wherein the locking element (8) is moved outside the housing (11).

3. Locking device according to claim 2, wherein the housing (11) comprises an upper opening (24) extending in a plane different from the plane in which the notch (18) extends such that the locking element (8) can be moved out of the housing (10) while being in the inactive position through the upper opening (24) of the housing (10).

4. Locking device according to claim 2 or 3, wherein the locking element (8) comprises two locking parts (14) movable relative to each other, between the active position, wherein the two locking parts (14) form together a locking element (8) having a width (e") equal or less than the width (e) of the notch (18) of the housing (11), and the inactive position, wherein the two locking parts (14) form together a locking element (8) having a width (e') greater than the width (e) of the notch (18).

5. Locking device according to claim 4, wherein the movement of the locking element (8) between the inactive position and the active position is triggered by the edges of the notch (18), each locking part (14) coming into contact with one of said edges when the locking device (1) is moved from its unlocked position to its locked position such that said edges move the locking parts (14) towards the active position while the locking element (8) is engaged in the notch (18).

6. Locking device according to claim 1, wherein the locking element (8) is formed by a deformable housing (30) defining a notch (36), said notch (36) having a first width (f) in the inactive position and a second width (s) in the active position, the complementary locking element (10) being formed by a tab (32) having a width (t) superior to the first width (f) and inferior or equal to the second with (s).

7. Locking device according to claim 6, wherein the locking element (8) comprises two locking parts (34) movable relative to each other, said parts (34) being close from each other in the inactive position and being spaced from each other in the active position, the locking device (1) comprising two biasing elements (20) each arranged to urge one of the locking part (34) towards the other locking part (34).

8. Locking device according to any one of claims 1 to 7, wherein the locking element (8) is movable in rotation around a first axis (A) between its inactive position and its active position and is further movable in rotation around a second axis (B) between its locking position and its unlocking position, the second axis (B) being different from the first axis (A).

9. Locking device according to claim 8, wherein the locking element (8) is provided on an actuation rod (12) attached to the first element and movable in rotation relative to said first element around the second axis (B) such that the actuation of the actuation rod in rotation moves the locking element (8) between the locking position and the unlocking position.

10. Locking device according to claim 9, wherein the locking element (8) is mounted in rotation around the first axis (A) on at least one pin (15) extending from the actuation rod (12) along the first axis (A).

11. Locking device according to claim 9 or 10, wherein two separate locking elements (8) are provided on the actuation rod (12), said locking elements (8) being spaced from each other along the second axis (B), the second element having two corresponding complementary locking elements (10) for receiving said locking elements (8) in the locked position of the locking device.

12. Storage device (2) comprising a main body (6) forming a storage compartment and a door (4) for closing said storage compartment, said door (4) being movable relative to the main body (6) between a locked position and an unlocked position, **characterized in that** the storage device (2) comprises a locking device (1) according to any one of claims 1 to 11, wherein the first element is formed by the door (4) and the second element is formed by the main body (6).

13. Storage device according to claim 12, wherein the locking element (1) is provided on the inner face (11) of the door (4), said inner face (4) facing the storage compartment in the locked position of the door (4), the locking device (1) comprising an actuator (26) for moving the locking element (8) in the second direction, said actuator (26) extending through the door (4) from the inner face (11) to the outer face (28) of said door (4) such that the locking element (8) can be actuated from its locking position to its unlocking position from the outer face (28) of the door (4) when the door (4) is in its locked position.

## Patentansprüche

1. Verriegelungsvorrichtung (1) zum Verriegeln eines ersten Elements relativ zu einem zweiten Element, wobei das erste Element und das zweite Element zwischen einer Verriegelungsposition der Verriegelungsvorrichtung (1) und einer Entriegelungsposition der Verriegelungsvorrichtung (1) relativ zueinander beweglich sind, wobei die Verriegelungsvorrichtung (1) umfasst:
- mindestens ein an dem ersten Element vorgesehenes Verriegelungselement (8), wobei das Verriegelungselement (8) in einer ersten Richtung (F) zwischen einer inaktiven Position und einer aktiven Position bewegbar ist;
- mindestens ein Vorspannelement (20), um das Verriegelungselement (8) in seine inaktive Position zu drängen,
- mindestens ein komplementäres Verriegelungselement (10), das an dem zweiten Element vorgesehen ist, wobei das komplementäre Verriegelungselement (10) so angeordnet ist, dass es das Verriegelungselement (8) von seiner aktiven Position in seine inaktive Position bewegt, wenn die Verriegelungsvorrichtung von der entriegelten Position in die verriegelte Position bewegt wird, und das Verriegelungselement (8) in seiner inaktiven Position hält, wenn sich die Verriegelungsvorrichtung (1) in ihrer verriegelten Position befindet, **dadurch gekennzeichnet, dass** das Verriegelungselement (8) ferner in einer zweiten, sich von der ersten Richtung unterscheidenden Richtung (D) beweglich ist, zwischen einer Verriegelungsposition, in der sich das Verriegelungselement (8) in seiner inaktiven Position befindet und von dem komplementären Verriegelungselement (10) gehalten wird, und einer Entriegelungsposition, in der das Verriegelungselement (8) von dem komplementären Verriegelungselement (10) wegbewegt wird, wobei das Verriegelungselement (8) während seiner Bewegung zwischen der verriegelten Position und der entriegelten Position in seiner inaktiven Position bleibt.

2. Verriegelungsvorrichtung (1) nach Anspruch 1, bei der das komplementäre Verriegelungselement (10) durch mindestens eine auf dem zweiten Element vorgesehene Aufnahme (11) gebildet ist, wobei die Aufnahme (11) eine Kerbe (18) aufweist, durch die das Verriegelungselement (8) eingreifen kann, wenn sich das Verriegelungselement (8) in seiner aktiven Stellung befindet, wenn die Verriegelungsvorrichtung von der entriegelten Stellung in die verriegelte Stellung bewegt wird, und sich nicht durch die Kerbe (18) bewegen kann, wenn sich das Verriegelungselement (8) in seiner inaktiven Stellung befindet, so dass die Verriegelungsvorrichtung (1) in ihrer verriegelten Stellung gehalten wird, wenn sich das Verriegelungselement (8) in seiner inaktiven Stellung in der Aufnahme (11) befindet, wobei das Verriegelungselement (8) außerdem in der zweiten Richtung (D) zwischen der Verriegelungsstellung, in der das Verriegelungselement (8) in seiner inaktiven Stellung in der Aufnahme (11) gehalten wird, und einer Entriegelungsstellung, in der das Verriegelungselement (8) aus der Aufnahme (11) herausbewegt wird, beweglich ist.

3. Verriegelungsvorrichtung nach Anspruch 2, wobei die Aufnahme (11) eine obere Öffnung (24) aufweist, die sich in einer Ebene erstreckt, die sich von der Ebene unterscheidet, in der sich die Kerbe (18) erstreckt, so dass das Verriegelungselement (8) aus der Aufnahme (10) herausbewegt werden kann, während es sich in der inaktiven Position durch die obere Öffnung (24) der Aufnahme (10) befindet.

4. Verriegelungsvorrichtung nach Anspruch 2 oder 3, wobei das Verriegelungselement (8) zwei Verriegelungsteile (14) umfasst, die relativ zueinander zwischen der aktiven Position, in der die beiden Verriegelungsteile (14) zusammen ein Verriegelungselement (8) mit einer Breite (e") bilden, die gleich oder kleiner als die Breite (e) der Kerbe (18) des Gehäuses (11) ist, und der inaktiven Position beweglich sind, wobei die beiden Verriegelungsteile (14) zusammen ein Verriegelungselement (8) mit einer Breite (e') bilden, die größer als die Breite (e) der Kerbe (18) ist.

5. Verriegelungsvorrichtung nach Anspruch 4, bei der die Bewegung des Verriegelungselements (8) zwischen der inaktiven Position und der aktiven Position durch die Kanten der Kerbe (18) ausgelöst wird, wobei jedes Verriegelungsteil (14) mit einer der Kanten in Kontakt kommt, wenn die Verriegelungsvorrichtung (1) von ihrer entriegelten Position in ihre verriegelte Position bewegt wird, so dass sich die Kanten die Verriegelungsteile (14) in die aktive Position bewegen, während das Verriegelungselement (8) in die Kerbe (18) eingreift.

6. Verriegelungsvorrichtung nach Anspruch 1, bei der das Verriegelungselement (8) durch eine verformbare Aufnahme (30) gebildet ist, die eine Kerbe (36) definiert, wobei die Kerbe (36) eine erste Breite (f) in der inaktiven Position und eine zweite Breite (s) in der aktiven Position aufweist, wobei das komplementäre Verriegelungselement (10) durch eine Lasche (32) gebildet ist, die eine Breite (t) aufweist, die größer als die erste Breite (f) und kleiner oder gleich der zweiten Breite (s) ist.

7. Verriegelungsvorrichtung nach Anspruch 6, wobei das Verriegelungselement (8) zwei Verriegelungsteile (34) aufweist, die relativ zueinander beweglich sind, wobei die Teile (34) in der inaktiven Position nahe beieinander liegen und in der aktiven Position voneinander beabstandet sind, wobei die Verriegelungsvorrichtung (1) zwei Vorspannelemente (20) aufweist, die jeweils so angeordnet sind, dass sie eines der Verriegelungsteile (34) gegen das andere Verriegelungsteil (34) drängen.

8. Verriegelungsvorrichtung nach einem der Ansprüche 1 bis 7, wobei das Verriegelungselement (8) um eine erste Achse (A) zwischen seiner inaktiven Position und seiner aktiven Position drehbeweglich ist und ferner um eine zweite Achse (B) zwischen seiner Verriegelungsposition und seiner Entriegelungsposition drehbeweglich ist, wobei die zweite Achse (B) von der ersten Achse (A) verschieden ist.

9. Verriegelungsvorrichtung nach Anspruch 8, **dadurch gekennzeichnet, dass** das Verriegelungselement (8) auf einer Betätigungsstange (12) vorgesehen ist, die mit dem ersten Element verbunden und relativ zu dem ersten Element um die zweite Achse (B) drehbar ist, so dass die Drehbetätigung der Betätigungsstange das Verriegelungselement (8) zwischen der Verriegelungsstellung und der Entriegelungsstellung bewegt.

10. Verriegelungsvorrichtung nach Anspruch 9, **dadurch gekennzeichnet, dass** das Verriegelungselement (8) drehbar um die erste Achse (A) auf mindestens einem Stift (15) montiert ist, der sich von der Betätigungsstange (12) entlang der ersten Achse (A) erstreckt.

11. Verriegelungsvorrichtung nach Anspruch 9 oder 10, bei der zwei getrennte Verriegelungselemente (8) an der Betätigungsstange (12) vorgesehen sind, wobei die Verriegelungselemente (8) entlang der zweiten Achse (B) voneinander beabstandet sind, wobei das zweite Element zwei entsprechende komplementäre Verriegelungselemente (10) zur Aufnahme der Verriegelungselemente (8) in der Verriegelungsposition der Verriegelungsvorrichtung aufweist.

12. Aufbewahrungsvorrichtung (2) mit einem Hauptkörper (6), der ein Aufbewahrungsabteil bildet, und einer Tür (4) zum Verschließen des Aufbewahrungsabteils, wobei die Tür (4) relativ zum Hauptkörper (6) zwischen einer Verriegelungsstellung und einer Entriegelungsstellung beweglich ist, **dadurch gekennzeichnet, dass** die Aufbewahrungsvorrichtung (2) eine Verriegelungsvorrichtung (1) nach einem der Ansprüche 1 bis 11 aufweist,
wobei das erste Element durch die Tür (4) gebildet wird und das zweite Element durch den Hauptkörper (6) gebildet ist.

13. Aufbewahrungsvorrichtung nach Anspruch 12, bei der das Verriegelungselement (1) auf der Innenfläche (11) der Tür (4) vorgesehen ist, wobei die Innenfläche (4) in der Verriegelungsposition der Tür (4) dem Aufbewahrungsfach zugewandt ist, wobei die Verriegelungsvorrichtung (1) ein Betätigungselement (26) zum Bewegen des Verriegelungselements (8) in der zweiten Richtung umfasst, wobei sich das Betätigungselement (26) durch die Tür (4) von der Innenfläche (11) zur Außenfläche (28) der Tür (4) erstreckt, so dass das Verriegelungselement (8) von der Außenfläche (28) der Tür (4) aus seiner Verriegelungsposition in seine Entriegelungsposition betätigt werden kann, wenn sich die Tür (4) in ihrer Verriegelungsposition befindet.

## Revendications

1. Dispositif de verrouillage (1) pour verrouiller un premier élément par rapport à un deuxième élément, le premier élément et le deuxième élément étant mobiles l'un par rapport à l'autre entre une position verrouillée du dispositif de verrouillage (1) et une position déverrouillée du dispositif de verrouillage (1), ledit dispositif de verrouillage (1) comprenant :
- au moins un élément de verrouillage (8) prévu sur le premier élément, ledit élément de verrouillage (8) étant mobile dans une première direction (F) entre une position inactive et une position active ;
- au moins un élément de contrainte (20) pour pousser l'élément de verrouillage (8) vers sa position inactive,
- au moins un élément de verrouillage complémentaire (10) prévu sur le deuxième élément, ledit élément de verrouillage complémentaire (10) étant agencé pour déplacer l'élément de verrouillage (8) de sa position active à sa position inactive, lorsque le dispositif de verrouillage est déplacé de la position déverrouillée à la position verrouillée, et retenir l'élément de verrouillage (8) dans sa position inactive lorsque le dispositif de verrouillage (1) est dans sa position verrouillée,
**caractérisé en ce que** l'élément de verrouillage (8) est en outre mobile dans une deuxième direction (D), différente de la première direction, entre une position de verrouillage, dans laquelle l'élément de verrouillage (8) est dans sa position inactive et est retenu par l'élément de verrouillage complémentaire (10) et une position de déverrouillage dans laquelle l'élément de verrouillage (8) est éloigné de l'élément de verrouillage complémentaire (10), l'élément de verrouillage (8) restant dans sa position inactive pendant son déplacement entre la position verrouillée et la position déverrouillée.

2. Dispositif de verrouillage (1) selon la revendication 1, dans lequel l'élément de verrouillage complémentaire (10) est formé par au moins un boîtier (11) prévu sur le deuxième élément, ledit boîtier (11) comprenant une fente (18) à travers laquelle l'élément de verrouillage (8) peut se mettre en prise lorsque l'élément de verrouillage (8) est dans sa position active, lorsque l'élément de verrouillage est déplacé de la position déverrouillée à la position verrouillée, et ne pouvant pas se déplacer à travers la fente (18) lorsque l'élément de verrouillage (8) est dans sa position inactive, de sorte que le dispositif de verrouillage (1) est maintenu dans sa position verrouillée lorsque l'élément de verrouillage (8) est dans le boîtier (11) dans sa position inactive, l'élément de verrouillage (8) étant en outre mobile dans la deuxième direction (D) entre la position de verrouillage, dans laquelle l'élément de verrouillage (8) est retenu dans le boîtier (11) dans sa position inactive, et une position de déverrouillage dans laquelle l'élément de verrouillage (8) est déplacé à l'extérieur du boîtier (11).

3. Dispositif de verrouillage selon la revendication 2, dans lequel le boîtier (11) comprend une ouverture supérieure (24) s'étendant dans un plan différent du plan dans lequel la fente (18) s'étend, de sorte que l'élément de verrouillage (8) peut être déplacé hors du boîtier (10) tout en étant dans la position inactive à travers l'ouverture supérieure (24) du boîtier (10).

4. Dispositif de verrouillage selon la revendication 2 ou 3, dans lequel l'élément de verrouillage (8) comprend deux parties de verrouillage (14) mobiles l'une par rapport à l'autre, entre la position active dans laquelle les deux parties de verrouillage (14) forment ensemble un élément de verrouillage (8) ayant une largeur (e") égale ou inférieure à la largeur (e) de la fente (18) du boîtier (11), et la position active dans laquelle les deux parties de verrouillage (14) forment ensemble un élément de verrouillage (8) ayant une largeur (e") supérieure à la largeur (e) de la fente (18).

5. Dispositif de verrouillage selon la revendication 4, dans lequel le mouvement de l'élément de verrouillage (8) entre la position inactive et la position active est déclenché par les bords de la fente (18), chaque partie de verrouillage (14) venant en contact avec l'un desdits bords lorsque le dispositif de verrouillage (1) passe de sa position déverrouillée à sa position verrouillée de sorte que lesdits bords déplacent les parties de verrouillage (14) vers la position active alors que l'élément de verrouillage (8) est engagé dans la fente (18).

6. Dispositif de verrouillage selon la revendication 1, dans lequel l'élément de verrouillage (8) est formé par un boîtier déformable (30) définissant une fente (36), ladite fente (36) ayant une première largeur (f) dans la position inactive et une seconde largeur (s) dans la position active, l'élément de verrouillage complémentaire (10) étant formé par une languette (32) ayant une largeur (t) supérieure à la première largeur (f) et inférieure ou égale à la seconde largeur (s).

7. Dispositif de verrouillage selon la revendication 6, dans lequel l'élément de verrouillage (8) comprend deux parties de verrouillage (34) mobiles l'une par rapport à l'autre, lesdites parties (34) étant à proximité l'une de l'autre dans la position inactive et étant espacées l'une de l'autre dans la position active, le dispositif de verrouillage (1) comprenant deux éléments de contrainte (20), chacun agencé pour pousser la première partie de verrouillage (34) vers l'autre partie de verrouillage (34).

8. Dispositif de verrouillage selon l'une quelconque des revendications 1 à 7, dans lequel l'élément de verrouillage (8) est mobile, en rotation, autour d'un premier axe (A) entre sa position inactive et sa position active et est en outre mobile en rotation autour d'un deuxième axe (B) entre sa position de verrouillage et sa position de déverrouillage, le deuxième axe (B) étant différent du premier axe (A).

9. Dispositif de verrouillage selon la revendication 8, dans lequel l'élément de verrouillage (8) est prévu sur une tige d'actionnement (12) fixée sur le premier élément et mobile, en rotation, par rapport audit premier élément autour du deuxième axe (B) de sorte que l'actionnement de la tige d'actionnement en rotation déplace l'élément de verrouillage (8) entre la position de verrouillage et la position de déverrouillage.

10. Dispositif de verrouillage selon la revendication 9, dans lequel l'élément de verrouillage (8) est monté, en rotation, autour du premier axe (A) sur au moins une broche (15) s'étendant à partir de la tige d'actionnement (12) le long du premier axe (A).

11. Dispositif de verrouillage selon la revendication 9 ou 10, dans lequel les deux éléments de verrouillage séparés (8) sont prévus sur la tige d'actionnement (12), lesdits éléments de verrouillage (8) étant espacés l'un de l'autre le long du deuxième axe (B), le deuxième élément ayant deux éléments de verrouillage complémentaires (10) correspondants pour recevoir lesdits éléments de verrouillage (8) dans la position verrouillée du dispositif de verrouillage.

12. Dispositif de stockage (2) comprenant un corps principal (6) formant un compartiment de stockage et une porte (4) pour fermer ledit compartiment de stockage, ladite porte (4) étant mobile par rapport au corps principal (6) entre une position verrouillée et une position déverrouillée, **caractérisé en ce que** le dispositif de stockage (2) comprend un dispositif de verrouillage (1) selon l'une quelconque des revendications 1 à 11,
dans lequel le premier élément est formé par la porte (4) et le deuxième élément est formé par le corps principal (6).

13. Dispositif de stockage selon la revendication 12, dans lequel l'élément de verrouillage (1) est prévu sur la face interne (11) de la porte (4), ladite face interne (4) faisant face au compartiment de stockage dans la position verrouillée de la porte (4), le dispositif de verrouillage (1) comprenant un actionneur (26) pour déplacer l'élément de verrouillage (8) dans la deuxième direction, ledit actionneur (26) s'étendant à travers la porte (4), de la face interne (11) à la face externe (28) de ladite porte (4), de sorte que l'élément de verrouillage (8) peut être actionné de sa position de verrouillage à sa position de déverrouillage à partir de la face externe (28) de la porte (4), lorsque la porte (4) est dans sa position verrouillée.
